(19) Europäisches Patentamt / European Patent Office / Office européen des brevets

(11) **EP 1 867 891 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
*F16F 7/09* (2006.01)  *D06F 37/20* (2006.01)

(21) Anmeldenummer: **07002588.7**

(22) Anmeldetag: **07.02.2007**

(54) **Verfahren zur Beladungs-Ermittlung bei einer Waschmaschine**

Method for determining the load of a washing machine

Procédé de détermination de chargement dans un lave-linge

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.06.2006 DE 102006027295**

(43) Veröffentlichungstag der Anmeldung:
**19.12.2007 Patentblatt 2007/51**

(73) Patentinhaber: **SUSPA Holding GmbH**
**90518 Altdorf (DE)**

(72) Erfinder: **Pelczer, Andreas**
**91717 Wassertrüdingen (DE)**

(74) Vertreter: **Rau, Albrecht et al**
**Rau, Schneck & Hübner**
**Patentanwälte**
**Königstrasse 2**
**90402 Nürnberg (DE)**

(56) Entgegenhaltungen:
**EP-A- 0 051 491        DE-A1- 10 046 712**
**DE-A1-0102005 038 95        DE-B3- 10 334 572**

**Beschreibung**

Die Erfindung betrifft ein Verfahren zur Beladungs-Ermittlung bei einer Waschmaschine, insbesondere einer Waschmaschine mit Schleudergang.

Verfahren zur Ermittlung der Beladung einer Waschmaschine sind bekannt und werden in modernen Waschmaschinen bereits serienmäßig eingesetzt siehe z.B. das Dokument DE-B-10334572. Als Beladung wird das Gewicht der in die Waschmaschine eingebrachten und zu waschenden Wäsche bezeichnet. In modernen Waschmaschinen wird in Abhängigkeit von der Beladung der Waschvorgang gesteuert und optimiert. Nachteilig bei den bekannten Verfahren ist, dass die Beladungs-ermittlung aufgrund der nicht-linearen Dämpferkennlinie oftmals sehr ungenau ist bzw. Dämpfer mit linearer Kennlinie sehr viel teurer sind.

Der Erfindung liegt die Aufgabe zugrunde, ein Verfahren zur Beladungs-Ermittlung bei einer Waschmaschine bereitzustellen, mit dem eine einfache und exakte Beladungs-Ermittlung möglich ist.

Diese Aufgabe wird durch die Merkmale des Anspruchs 1 gelöst. Der Kern der Erfindung besteht darin, dass durch Messen einer die Beladung charakterisierenden Größe im unbeladenen Zustand der Waschmaschine ein erster Messwert und im beladenen Zustand der Waschmaschine ein zweiter Messwert bestimmt wird, wobei mittels der Messwerte die Beladung der Waschmaschine berechnet wird. In Abhängigkeit der Messwerte werden Aufhängungs-Kräfte des mindestens einen Aufhängungs-Elements und Dämpfer-Kräfte des mindestens einen Dämpfers im unbeladenen und beladenen Zustand der Waschmaschine berechnet, wobei durch einen Vergleich der Aufhängungs-Kräfte und der Dämpfer-Kräfte die Beladung ermittelt wird. Das Berechnen der Beladung der Waschmaschine erfolgt in Abhängigkeit der Aufhängungs-Kräfte und der Dämpfer-Kräfte. Das Verfahren ermöglicht somit eine einfache und exakte Beladungs-Ermittlung bei Dämpfern mit nicht-linearer Kennlinie.

Die nachfolgende Beschreibung bezieht sich auf einen bestimmten Freilauf-Dämpfer-Typ. Auch andere Freilauf-Dämpfer-Typen können für dieses Verfahren genutzt werden.

Weitere Merkmale und Vorteile der Erfindung ergeben sich aus den Unteransprüchen.

Zusätzliche Merkmale, Einzelheiten und Vorteile der Erfindung ergeben sich aus der nachfolgenden Beschreibung mehrerer Ausführungsbeispiele der Erfindung anhand der Zeichnung. Es zeigt:

Fig. 1     eine Trommel-Waschmaschine in schematischer Darstellung in Seitenansicht,

Fig. 2     die Trommel-Waschmaschine nach Fig. 1 in Vorderansicht,

Fig. 3     einen Axialschnitt eines Dämpfers der Trommel-Waschmaschine nach Fig. 1,

Fig. 4     eine schematische Darstellung einer Beladungs-Ermittlungs-Einheit der Trommel-Waschmaschine nach Fig. 1 gemäß einem ersten Ausführungsbeispiel,

Fig. 5     ein Diagramm einer Aufhängungs-Element-Kennlinie eines Aufhängungs-Elements der Trommel-Waschmaschine nach Fig. 1,

Fig. 6     ein Diagramm einer Dämpfer-Kennlinie des Dämpfers nach Fig. 3, und

Fig. 7     eine schematische Darstellung einer Beladungs-ErmittlungsEinheit der Trommel-Waschmaschine nach Fig. 1 gemäß einem zweiten Ausführungsbeispiel.

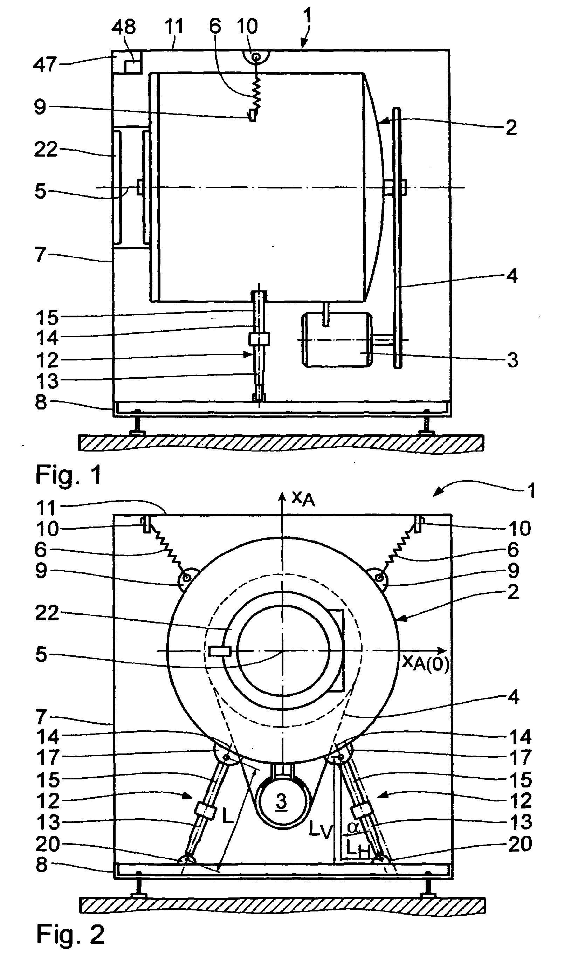

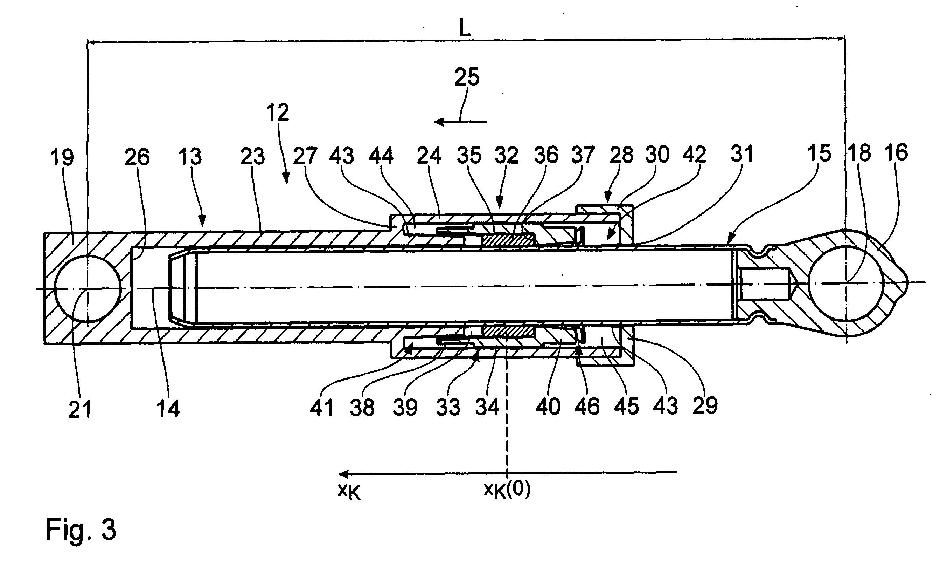

Nachfolgend wird unter Bezugnahme auf die Fig. 1 bis 6 ein erstes Ausführungsbeispiel der Erfindung beschrieben. Eine in den Fig. 1 und 2 dargestellte Trommel-Waschmaschine 1 weist ein schwingungsfähiges Wasch-Aggregat 2 mit einem Antriebs-Motor 3 auf, der eine nicht im Einzelnen dargestellte Wasch-Trommel über einen Riemen-Trieb 4 um eine Trommel-Achse 5 antreibt. Weitere mit dem Wasch-Aggregat 2 verbundene Bestandteile, beispielsweise ein Getriebe, sind der Einfachheit halber nicht dargestellt. Das schwingungsfähige Wasch-Aggregat 2 ist mittels zwei als Schrauben-Zugfedern ausgebildeten Aufhängungs-Elementen 6 an einem Waschmaschinen-Gehäuse 7 aufgehängt, das gegenüber einem auf dem Boden stehenden Waschmaschinen-Gestell 8 abgestützt und mit diesem verbunden ist. Die als Schrauben-Zugfedern ausgebildeten Aufhängungs-Elemente 6 sind einerseits an ersten Aufhängungs-Ösen 9 angebracht, die im oberen Bereich des Wasch-Aggregats 2 angeordnet sind. Andererseits sind sie an zweiten Aufhängungs-Ösen 10 aufgehängt, die am Waschmaschinen-Gehäuse 7 ausgebildet sind. Das Waschmaschinen-Gehäuse 7 ist mit einer Deckplatte 11 abgedeckt.

An der Unterseite des Wasch-Aggregats 2 sind mittig zwei ReibungsDämpfer 12 angebracht, die mit dem Waschmaschinen-Gestell 8 verbunden sind. Jeder Reibungs-Dämpfer 12 weist ein rohrförmiges Gehäuse 13 mit einer Mittel-Längs-Achse 14 auf, in dem koaxial ein Stößel 15 verschiebbar geführt ist. Der Stößel 15 weist an seinem freien Ende ein erstes Befestigungs-Element 16 auf, mittels dem der Reibungs-Dämpfer 12 an einem ersten Lager 17 an dem Wasch-Aggregat 2 derart angebracht ist, dass der Reibungs-Dämpfer 12 um eine zu der Trommel-Achse 5 parallele erste Schwenk-Achse 18 relativ zu dem Wasch-Aggregat 2 schwenkbar ist. An dem freien Ende des Gehäuses 13 ist ein zweites Befestigungs-Element 19 angebracht, mittels dem der Reibungs-Dämpfer 12 an einem zweiten Lager 20 an dem Waschmaschinen-Gestell 8 derart angebracht ist, dass der Reibungs-Dämpfer 12 um eine zu der Trommel-Achse 5 parallele zweite Schwenk-Achse 21 relativ zu dem Waschmaschinen-Gestell 8 schwenkbar ist. Die Eingabe und Entnahme von Wäsche erfolgt durch eine an dem Wasch-Aggregat 2 angeordnete Klappe 22.

Das rohrförmige Gehäuse 13 des Reibungs-Dämpfers 12 weist einen Führungs-Abschnitt 23 und einen mit diesem einstückig ausgebildeten Aufnahme-Abschnitt 24 auf. Der Führungs-Abschnitt 23 ist in einer Einschub-Richtung 25 dem Aufnahme-Abschnitt 24 nachgeordnet. Das freie Ende des Führungs-Abschnitts 23, welches gleichzeitig das freie Ende des Gehäuses 13 bildet, ist mittels eines Bodens 26 verschlossen. Der Boden 26 ist einstückig mit dem Befestigungs-Element 19 ausgebildet. Der Führungs-Abschnitt 23 weist einen Innen-Durchmesser auf, der derart gewählt ist, dass der Stößel 15 innerhalb des Gehäuses 13 entlang der Einschub-Richtung 25 mit möglichst wenig Spiel geführt wird und haftreibungsfrei verschiebbar ist. Der Aufnahme-Abschnitt 24 weist einen im Vergleich zu dem Innen-Durchmesser des Führungs-Abschnitts 23 größeren Innen-Durchmesser auf. Der Aufnahme-Abschnitt 24 ist mittels eines ringförmigen Anschlag-Bundes 27 an dem stößelseitigen Ende des Führungs-Abschnitts 23 befestigt. An seinem dem Führungs-Abschnitt 23 abgewandten Ende ist der Aufnahme-Abschnitt 24 mittels einer Verschluss-Kappe 28 verschlossen. Die Verschluss-Kappe 28 weist einen ringförmigen Verschluss-Kappen-Bund 29 und einen daran befestigten rohrförmigen Befestigungs-Abschnitt 30 auf, wobei sich der Befestigungs-Abschnitt 30 entlang der Mittel-Längs-Achse 14 erstreckt und den Aufnahme-Abschnitt 24 umgreift. Das dem Führungs-Abschnitt 23 abgewandte Ende des Aufnahme-Abschnitts 24 liegt gegen den Verschluss-Kappen-Bund 29 an, wobei die Verschluss-Kappe 28 mittels eines nicht näher dargestellten Rastmechanismus im Bereich des Befestigungs-Abschnitts 30 gegen Verschiebung gesichert ist. Der ringförmige Verschluss-Kappen Bund 29 bildet eine Verschluss-Kappen-Öffnung 31 aus, in der der Stößel 15 mit möglichst wenig Spiel und reibungsoptimiert geführt wird.

Innerhalb des Gehäuses 13 ist im Bereich des Aufnahme-Abschnitts 24 eine Reibungs-Dämpfungs-Einheit 32 angeordnet. Die Reibungs-Dämpfungs-Einheit 32 weist einen entlang der Mittel-Längs-Achse 14 relativ zu dem Gehäuse 13 und dem Stößel 15 verschiebbaren Kolben 33 auf. Der Kolben 33 ist im Wesentlichen rohrförmig ausgebildet und umfasst einen mittig gelegenen Anpress-Abschnitt 34, in dem eine dem Stößel 15 zugewandte umlaufende Ringnut 35 angeordnet ist. In der Ringnut 35 ist ein ringförmig umlaufender, elastischer Reib-Belag 36 angeordnet, der gegen Seitenwände 37 der Ringnut 35 anliegt, sodass dieser von dem Kolben 33 teilweise umschlossen wird und relativ zu dem Kolben 33 gegen Verschiebung gesichert ist. Bei einer Relativbewegung zwischen dem Stößel 15 und dem Kolben 33 reibt der Reib-Belag 36 gegen den Stößel 15.

Ausgehend von der dem Gehäuse 13 zugewandten Seitenwand 37 erstreckt sich ein einstückig mit dem Anpress-Abschnitt 34 ausgebildeter erster Anschlag-Abschnitt 38. Der erste Anschlag-Abschnitt 38 ist rohrförmig ausgebildet und liegt nicht gegen den Aufnahme-Abschnitt 24 des Gehäuses 13 an. Der Anschlag-Abschnitt 38 weist entlang seines Innen-Umfangs mehrere gleichmäßig beabstandet angeordnete und sich entlang der Mittel-Längs-Achse 14 erstreckende sowie in Richtung des Reib-Belags 36 sich verjüngende Längs-Nuten 39 auf, welche sich zu dem Reib-Belag 36 erstrecken. Der Reib-Belag 36 liegt somit im Bereich der Längs-Nuten 39 in axialer Richtung frei. Entsprechend dem ersten Anschlag-Abschnitt 38 erstreckt sich ausgehend von der dem Stößel 15 zugewandten Seitenwand 37 ein zweiter Anschlag-Abschnitt 40. Der zweite Anschlag-Abschnitt 40 ist entsprechend dem ersten Anschlag-Abschnitt 38 aufgebaut und einstückig mit dem Anpress-Abschnitt 34 ausgebildet.

Zur Begrenzung der Bewegung des Kolbens 33 weist die Reibungs-Dämpfungs-Einheit 32 ein gehäuseseitiges erstes Anschlag-Element 41 und ein stößelseitiges zweites Anschlag-Element 42 auf. Das erste Anschlag-Element 41 umfasst den Anschlag-Bund 27 und mehrere Anschlag-Stempel 43, die sich ausgehend von dem Anschlag-Bund 27 entlang der Mittel-Längs-Achse 14 erstrecken. Die Anschlag-Stempel 43 sind derart ausgestaltet und angeordnet, dass der Kolben 33 mit den Längs-Nuten 39 des ersten Anschlag-Abschnitts 38 die Anschlag-Stempel 43 umgreifen kann, sodass der Kolben 33 in einen ersten ringförmigen Zwischenraum 44 zwischen dem Aufnahme-Abschnitt 24 und den Anschlag-Stempeln 43 verschiebbar ist. Das zweite Anschlag-Element 42 umfasst den Verschluss-Kappen-Bund 29 und mehrere Anschlag-Stempel 43, die an dem Verschluss-Kappen-Bund 29 angeordnet sind und sich entlang der Mittel-Längs-Achse 14 erstrecken. Die Anschlag-Stempel 43 des zweiten Anschlag-Elements 42 bilden zusammen mit dem Aufnahme-Abschnitt 24 des Gehäuses 13 einen zweiten ringförmigen Zwischenraum 45, in den der zweite Anschlag-Abschnitt 40 des Kolbens 33 verschiebbar ist. Zur Dämpfung des Anschlagens des Kolbens 33 an dem Anschlag-Bund 27 oder dem Verschluss-Kappen-Bund 29 bei extrem großen Schwingungsamplituden sind zwischen dem Kolben 33 und den Anschlag-Elementen 41, 42 Anschlagpuffer 46 angeordnet. Hinsichtlich des detaillierten Aufbaus des Reibungs-Dämpfers 12 wird auf die DE 10 2005 038 950.3 und DE 10 2005 038 953.8 verwiesen.

Die Reibungs-Dämpfer 12 weisen bezogen auf ihre Schwenk-Achsen 18, 21 jeweils eine Dämpfer-Länge L auf. Die Reibungs-Dämpfer 12 sind zur Abstützung des Wasch-Aggregats 2 relativ zu dem Waschmaschinen-Gestell 8 schräg angeordnet. Die Reibungs-Dämpfer 12 weisen eine relativ zu dem Waschmaschinen-Gestell 8 vertikal verlaufende Längenkomponente auf, die als vertikale Dämpfer-Länge $L_V$ bezeichnet wird. Weiterhin weisen die Reibungs-Dämpfer 12 eine relativ zu dem Waschmaschinen-Gestell 8 horizontal verlaufende Längenkomponente auf, die als horizontale Dämpfer-Länge $L_H$ bezeichnet wird. Die Dämpfer-Länge L und die vertikale Dämpfer-Länge $L_V$ schließen infolge des schrägen Einbaus der Reibungs-Dämpfer 12 einen Winkel $\alpha$ ein. Für die Dämpfer-Längen L, $L_V$, $L_H$ gelten allgemein die Beziehungen:

$$L^2 = L_V{}^2 + L_H{}^2 \qquad (Gl.\ 1)$$

$$L_V = L \bullet \cos\alpha \qquad (Gl.\ 2)$$

$$L_H = L \bullet \sin\alpha \qquad (Gl.\ 3)$$

Die Trommel-Achse 5 des Wasch-Aggregats 2 weist relativ zu dem Waschmaschinen-Gestell 8 eine vertikale Position auf, die als Wasch-Aggregat-Position $X_A$ bezeichnet wird. Die Wasch-Aggregat-Position $X_A$ wird in der in Fig. 2 dargestellten Pfeilrichtung positiv gezählt. Ferner weist der Kolben 33 relativ zu dem Gehäuse 13 entlang der Mittel-Längs-Achse 14 eine Kolben-Position $X_K$ auf. Die Kolben-Position $X_K$ wird in Einschub-Richtung 25 positiv gezählt. In einem Ausgangszustand der Trommel-Waschmaschine 1, in dem diese unbeladen und der Kolben 33 in dem Aufnahme-Abschnitt 24 entlang der Mittel-Längs-Achse 14 mittig angeordnet ist, weist die Trommel-Waschmaschine 1 die Ausgangswerte L = L (0), $L_V$ = $L_V$ (0), $L_H$ = $L_H$ (0), $x_A$ = $x_A$ (0) = 0 mm, $x_K$ = $x_K$ (0) = 0 mm und $\alpha$ = $\alpha$ (0) auf.

Die Trommel-Waschmaschine 1 ist mit einem nicht dargestellten Mess-Sensor zur Messung der Dämpfer-Länge L versehen. Derartige Mess-Sensoren sind bekannt und können mechanisch, elektrisch, induktiv oder optisch ausgeführt sein.

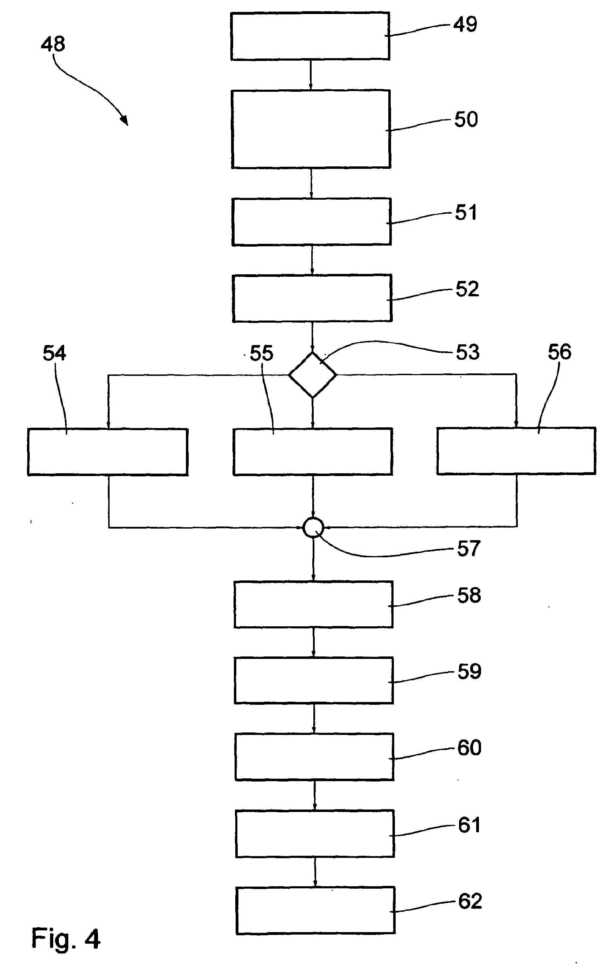

Zur Steuerung des Wasch-Vorgangs weist die Trommel-Waschmaschine 1 eine Steuer-Einheit 47 auf. Die Steuer-Einheit 47 umfasst eine in Fig. 4 dargestellte Beladungs-Ermittlungs-Einheit 48. Die Beladungs-Ermittlungs-Einheit 48 weist ein erstes Messwert-Aufnahme-Element 49 auf, dem ein erstes Geometrie-Berechnungs-Element 50, ein erstes Kraft-Berechnungs-Element 51 und ein zweites Kraft-Berechnungs-Element 52 nachgeordnet sind. Dem zweiten Kraft-Berechnungs-Element 52 ist ein Abfrage-Element 53 nachgeordnet, das einem ersten Kolben-Berechnungs-Element 54, einem zweiten Kolben-Berechnungs-Element 55 und einem dritten Kolben-Berechnungs-Element 56 verbunden ist, die parallel zueinander verlaufenden Signalzweigen angeordnet sind. Den Kolben-Berechnungs-Elementen 54, 55, 56 ist ein Verknüpfungs-Element 57 nachgeordnet, in dem die Signalzweige wieder zusammengeführt sind. Dem Verknüpfungs-Element 57 ist ein zweites Messwert-Aufnahme-Element 58, ein zweites Geometrie-Berechnungs-Element 59, ein drittes Kraft-Berechnungs-Element 60, ein viertes Kraft-Berechnungs-Element 61 und ein Beladungs-Berechnungs-Element 62 nachgeordnet. Die Elemente der Beladungs-Ermittlungs-Einheit 48 stehen miteinander in Signalverbindung und sind als Hardware und/oder als Software ausgeführt.

Nachfolgend wird die Funktionsweise der Trommel-Waschmaschine 1 und der Beladungs-Ermittlungs-Einheit 48 genauer beschrieben. Im unbeladenen Zustand der Trommel-Waschmaschine 1 wird durch Messen der Dämpfer-Länge L ein erster Messwert $M_1$ bestimmt. Die Dämpfer-Länge L stellt eine die Beladung bzw. die Vorspannung, verursacht durch den vorrangegangenen Waschgang, charakterisierende Größe dar. Mittels des ersten Messwert-Aufnahme-Elements 49 wird der erste Messwert $M_1$ aufbereitet, sodass die Messung eine erste Dämpfer-Länge L ($M_1$) im unbeladenen Zustand der Trommel-Waschmaschine 1 liefert. Die eine erste Dämpfer-Länge L ($M_1$) wird dem ersten Geometrie-Berechnungs-Element 50 zugeführt. Mittels des ersten Geometrie-Berechnungs-Elements 50 werden zunächst die Ausgangswerte L (0), $L_V$ (0), $L_H$ (0), $X_A$ (0) und $X_K$ (0) initialisiert. Anschließend wird mittels des ersten Geometrie-Berechnungs-Elements 50 eine erste vertikale Dämpfer-Länge $L_V$ ($M_1$) und eine erste Wasch-Aggregat-Position $X_A$ ($M_1$) im unbeladenen Zustand der Trommel-Waschmaschine 1 berechnet. Die Berechnung erfolgt nach folgenden Gleichungen:

$$L_V\ (M_1) = sqrt\ (L\ (M_1)^2 - L_H\ (0)^2) \qquad (Gl.\ 4)$$

$$x_A (M_l) = x_A (0) - (L_V (0) - L_V (M_l)) \qquad (Gl. 5)$$

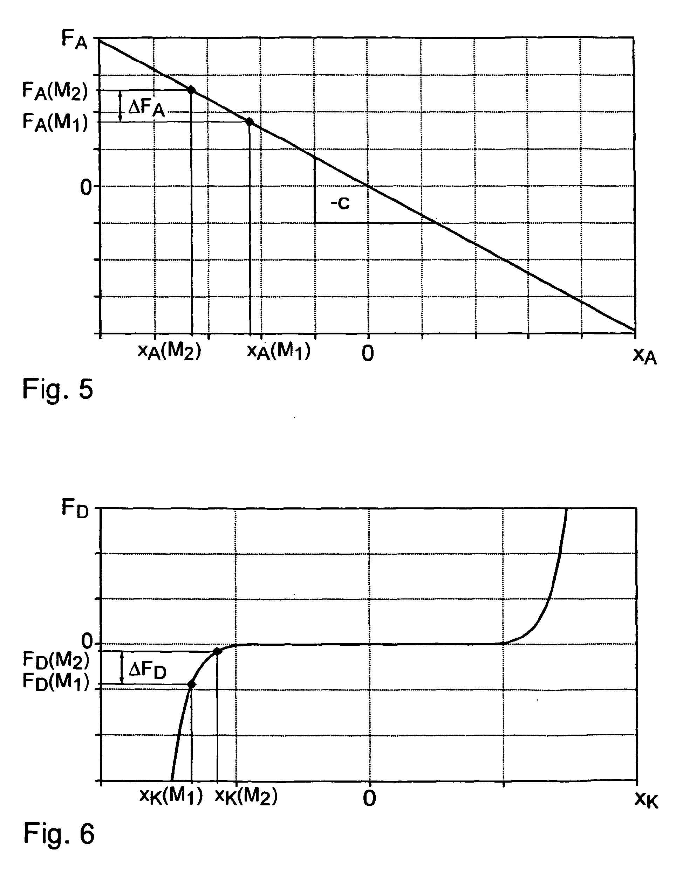

Die berechnete Wasch-Aggregat-Position $X_A (M_1)$ wird dem ersten Kraft-Berechnungs-Element 51 zugeführt. Mittels des ersten Kraft-Berechnungs-Elements 51 wird eine erste Aufhängungs-Kraft $F_A (M_1)$ der Aufhängungs-Elemente 6 berechnet. Die erste Aufhängungs-Kraft $F_A (M_1)$ ergibt sich aus einer Aufhängungs-Element-Kennlinie $F_A (x_A)$, die in Fig. 5 dargestellt ist. Die Aufhängungs-Element-Kennlinie $F_A (X_A)$ beschreibt den Zusammenhang zwischen der Wasch-Aggregat-Position $X_A$ und der Aufhängungs-Kraft $F_A$. Dadurch, dass die Aufhängungs-Elemente 6 als Schrauben-Zugfedern ausgebildet sind, ist die Aufhängungs-Element-Kennlinie $F_A (X_A)$ linear ausgebildet und weist eine Steigung -c auf, die der Federkonstante der Aufhängungs-Elemente 6 entspricht. Die Aufhängungs-Element-Kennlinie $F_A (x_A)$ ist in dem ersten Kraft-Berechnungs-Element 51 gespeichert, wobei durch Auswerten der Aufhängungs-Element-Kennlinie $F_A (x_A)$ bei der Wasch-Aggregat-Position $X_A (M_1)$ die erste Aufhängungs-Kraft $F_A (M_1)$ berechnet wird.

Die erste Aufhängungs-Kraft $F_A (M_1)$ wird dem zweiten Kraft-Berechnungs-Element 52 zugeführt. Mittels des zweiten Kraft-Berechnungs-Elements 52 wird eine erste Dämpfer-Kraft $F_D (M_1)$ der Reibungs-Dämpfer 12 berechnet. Infolge eines Kräftegleichgewichtes zwischen den Aufhängungs-Elementen 6 und den Reibungs-Dämpfern 12 erfolgt das Berechnen der ersten Dämpfer-Kraft $F_D (M_1)$ durch Gleichsetzen mit der negativen ersten Aufhängungs-Kraft $F_A (M_1)$. Für die erste Dämpfer-Kraft $F_D (M_1)$ gilt somit:

$$F_D ( M_l) = - F_A (M_l) \qquad (Gl. 6)$$

Die erste Dämpfer-Kraft $F_D (M_1)$ wird dem Abfrage-Element 53 zugeführt. Mittels des Abfrage-Elements 53 wird abgefragt und unterschieden, ob die erste Dämpfer-Kraft $F_D (M_1) < 0$, $F_D (M_1) = 0$ oder $F_D (M_1) > 0$ ist. Für den Fall, dass die erste Dämpfer-Kraft $F_D (M_1) < 0$ ist, wird die erste Dämpfer-Kraft $F_D (M_1)$ dem ersten Kolben-Berechnungs-Element 54 zugeführt. Mittels des ersten Kolben-Berechnungs-Elementes 54 wird eine erste Kolben-Position $X_K (M_1)$ berechnet. Die Berechnung erfolgt mittels einer Dämpfer-Kennlinie $F_D (X_K)$, die den Zusammenhang zwischen der Kolben-Position $X_K$ und der Dämpfer-Kraft $F_D$ beschreibt und in Fig. 6 dargestellt ist. Die Dämpfer-Kennlinie $F_D (X_K)$ ist in dem ersten Kolben-Berechnungs-Element 54 gespeichert. Das Berechnen der ersten Kolben-Position $X_K (M_1)$ erfolgt durch Auswerten der Dämpfer-Kennlinie $F_D (X_K)$ an der Stelle der ersten Dämpfer-Kraft $F_D (M_1)$. Die Dämpfer-Kennlinie $F_D (X_K)$ der Reibungs-Dämpfer 12 wurde vorab ermittelt. Der Fall, dass die erste Dämpfer-Kraft $F_D(M1)<0$ ist, ist der Regelfall und liegt hauptsächlich dann vor, wenn in der Trommel-Waschmaschine 1 zuvor eine große Beladung gewaschen wurde und der Kolben 33 nach dem Entfernen der Beladung gegen das zweite Anschlag-Element 42 auf Zug vorgespannt ist.

Für den Fall, dass die erste Dämpfer-Kraft $F_D (M_1) = 0$ ist, wird diese dem zweiten Kolben-Berechnungs-Element 55 geführt. Dadurch, dass der Kolben 33 in diesem Fall weder gegen das erste Anschlag-Element 41 noch gegen das zweite Anschlag-Element 42 anliegt, ist die Kolben-Position $X_K$ zwischen den Anschlag-Elementen 41, 42 durch die erste Dämpfer-Kraft $F_D (M_1)$ nicht eindeutig definiert. Dieser Fall liegt hauptsächlich dann vor, wenn in der Trommel-Waschmaschine 1 zuvor eine kleine - mittlere Beladung gewaschen wurde. In diesem Fall wird die erste Kolben-Position $X_K (M_1)$ als $X_K (0)$ angenommen.

Für den Fall, dass die erste Dämpfer-Kraft $F_D (M_1) > 0$ ist, wird diese dem dritten Kolben-Berechnungs-Element 56 zugeführt. Die Berechnung der ersten Kolben-Position $X_K (M_1)$ erfolgt in diesem Fall analog zu der Berechnung in dem ersten Kolben-Berechnungs-Element 54. Der Fall, dass die erste Dämpfer-Kraft $F_D (M_1) > 0$ ist, tritt gewöhnlich nicht auf. In diesem Fall ist der Kolben 33 auf Druck gegen das erste Anschlag-Element 41 gespannt. Das Verknüpfungs-Element 57 leitet die berechneten Kräfte, Längen und Positionen zu den nachfolgenden Elementen weiter.

Nach dem Beladen der Trommel-Waschmaschine 1 mit Wäsche befindet sich die Trommel-Waschmaschine 1 in einem beladenen Zustand. Das Gewicht der Wäsche wird als Beladung B bezeichnet. Durch Messen der Dämpfer-Länge L im beladenen Zustand der Trommel-Waschmaschine 1 wird ein zweiter Messwert $M_2$ bestimmt. Mittels des zweiten Messwert-Aufnahme-Elements 58 wird der zweite Messwert $M_2$ aufbereitet, sodass die Messung eine zweite Dämpfer-Länge $L (M_2)$ im beladenen Zustand der Trommel-Waschmaschine 1 liefert. Die zweite Dämpfer-Länge $L (M_2)$ charakterisiert die Beladung B der Trommel-Waschmaschine 1.

Die zweite Dämpfer-Länge $L (M_2)$ wird dem zweiten Geometrie-Berechnungs-Element 59 zugeführt. Mittels des zweiten Geometrie-Berechnungs-Elements 59 wird entsprechend den Gleichungen 4 und 5 eine zweite vertikale Dämpfer-Länge $L_V (M_2)$ und eine zweite Wasch-Aggregat-Position $X_A (M_2)$ berechnet.

Die zweite Wasch-Aggregat-Position $X_A (M_2)$ wird dem dritten Kraft-Berechnungs-Element 60 zugeführt. Mittels des dritten Kraft-Berechnungs-Elements 60 wird entsprechend zu dem ersten Kraft-Berechnungs-Element 51 eine zweite Aufhängungs-Kraft $F_A (M_2)$ berechnet. Weiterhin wird mittels des dritten Kraft-Berechnungs-Elements 60 eine Aufhän-

gungs-Kraft-Änderung $\Delta F_A = F_A (M_2) - F_A (M_1)$ berechnet. Die Aufhängungs-Kraft-Änderung $\Delta F_A$ ist die Differenz der zweiten Aufhängungs-Kraft $F_A (M_2)$ und der ersten Aufhängungs-Kraft $F_A (M_1)$. Die Aufhängungs-Kraft-Änderung $\Delta F_A$ wird dem vierten Kraft-Berechnungs-Element 61 und dem Beladungs-Berechnungs-Element 62 zugeführt.

Mittels des vierten Kraft-Berechnungs-Elements 61 wird zunächst eine zweite Kolben-Position $x_K (M_2)$ berechnet. Die Berechnung der zweiten Kolben-Position $x_K (M_2)$ erfolgt nach folgender Gleichung:

$$x_K (M_2) = x_K (M_1) - (L (M_2) - L(M_1)) \qquad (Gl.\ 7)$$

Mittels der zweiten Kolben-Position $x_K (M_2)$ kann aus der Dämpfer-Kennlinie $F_D (X_K)$ eine zweite Dämpfer-Kraft $F_D (M_2)$ berechnet werden. Hierzu wird die Dämpfer-Kennlinie $F_D (X_K)$ an der zweiten Kolben-Position $X_K (M_2)$ ausgewertet. Die Auswertung liefert die zweite Dämpfer-Kraft $F_D (M_2)$. Weiterhin wird mittels des vierten Kraft-Berechnungs-Elements 61 eine Dämpfer-Kraft-Änderung $\Delta F_D = F_D (M_2) - F_D (M_1)$ berechnet. Die Dämpfer-Kraft-Änderung $\Delta F_D$ ergibt sich als Differenz der berechneten zweiten Dämpfer-Kraft $F_D (M_2)$ und der ersten Dämpfer-Kraft $F_D (M_1)$. Die Dämpfer-Kraft-Änderung $\Delta F_D$ wird ebenfalls dem Beladungs-Berechnungs-Element 62 zugeführt.

Mittels des Beladungs-Berechnungs-Elements 62 wird die Beladung B der Trommel-Waschmaschine 1 berechnet. Die Berechnung der Beladung B erfolgt nach folgender Gleichung:

$$B = N \bullet (\Delta F_A + \Delta F_D) \qquad (Gl.\ 8)$$

Die Beladung B ergibt sich aus der Summe der Aufhängungs-Kraft-Änderung $\Delta F_A$ und der Dämpfer-Kraft-Änderung $\Delta F_D$, wobei die Summe mit der Anzahl N = 2 der Aufhängungs-Elemente 6 und der Reibungs-Dämpfer 12 multipliziert wird. In Abhängigkeit der berechneten Beladung B wird der Waschvorgang der Trommel-Waschmaschine 1 gesteuert. Hinsichtlich der genauen Funktionsweise der Trommel-Waschmaschine 1 und der Reibungs-Dämpfer 12 wird auf die DE 10 2005 038 950.3 und DE 10 2005 038 953.8 verwiesen.

Das Berechnungsbeispiel basiert auf einer Konfiguration der Trommel-Waschmaschine mit zwei Aufhängungsfedern und zwei Dämpfern. Bei anderen Konfigurationen (mehr Dämpfer und Aufhängungsfedern, auch ungerade Anzahl) müssen die Formeln entsprechend angepasst werden.

Dadurch, dass die Beladung B der Trommel-Waschmaschine 1 in Abhängigkeit der Aufhängungs-Kraft-Änderung $\Delta F_A$ und der Dämpfer-Kraft-Änderung $\Delta F_D$ berechnet wird, kann die Beladungserkennung auch mit Freilauf-Dämpfer und nicht linearer Kennlinie zuverlässig durchgeführt werden.

Alternativ kann das Abfrage-Element 53 derart ausgestaltet sein, dass die Abfrage nicht in Abhängigkeit der ersten Dämpfer-Kraft $F_D (M_1)$ erfolgt, sondern in Abhängigkeit der ersten Aufhängungs-Kraft $F_A (M_1)$ oder der ersten Wasch-Aggregat-Position $X_A (M_1)$.

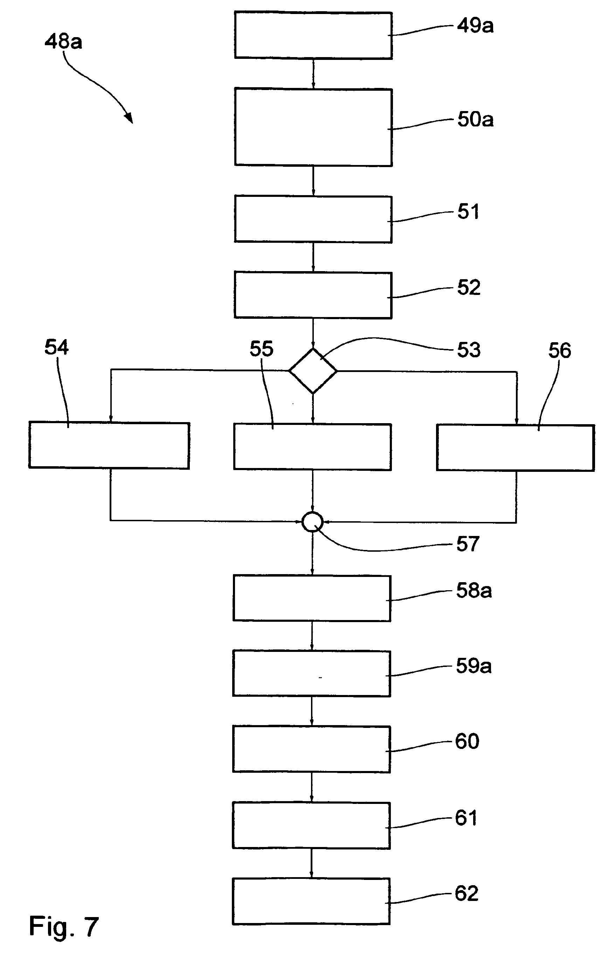

Nachfolgend wird unter Bezugnahme auf die Fig. 7 ein zweites Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht in der Ausgestaltung der Messwert-Aufnahme-Elemente 49a, 58a und der Geometrie-Berechnungs-Elemente 50a, 59a. Der erste Messwert $M_1$ und der zweite Messwert $M_2$ wird durch Messen der Wasch-Aggregat-Position $X_A$ bestimmt. Die Wasch-Aggregat-Position $X_A$ stellt hierbei eine die Vorspannung, verursacht durch den vorrangegangenen Waschgang, charakterisierende Größe dar. Zum Messen der Wasch-Aggregat-Position $x_A$ ist der Mess-Sensor im Bereich der Trommel-Achse 5 angeordnet. Der Mess-Sensor misst die vertikale Verschiebung der Trommel-Achse 5 und somit die Wasch-Aggregat-Position $X_A$. Der Mess-Sensor kann mechanisch, elektrisch, induktiv oder optisch ausgebildet sein.

Das erste Messwert-Aufnahme-Element 49a bereitet den Messwert $M_1$ auf und leitet die gemessene erste Wasch-Aggregat-Position $x_A (M_1)$ an das erste Geometrie-Berechnungs-Element 50a weiter. Mittels des ersten Geometrie-Berechnungs-Elements 50a werden nach den umgeformten Gleichungen 4 und 5 die erste vertikale Dämpfer-Länge $L_V(M_1)$ und die Dämpfer-Länge $L(M_1)$ berechnet. In entsprechender Weise wird mittels des zweiten Messwert-Aufnahme-Elements 58a die gemessene zweite Wasch-Aggregat-Position $X_A (M_2)$ dem zweiten Geometrie-Berechnungs-Element 59a zugeführt. Mittels des zweiten Geometrie-Berechnungs-Elements 59a wird entsprechend zu dem ersten Geometrie-Berechnungs-Element 50a die zweite vertikale Dämpfer-Länge $L_V (M_2)$ und die zweite Dämpfer-Länge $L (M_2)$ berechnet. Hinsichtlich der weiteren Funktionsweise der Trommel-Waschmaschine 1 und der Beladungs-Ermittlungs-Einheit 48a wird auf das erste Ausführungsbeispiel verwiesen.

**Patentansprüche**

1. Verfahren zur Beladungs-Ermittlung bei einer Waschmaschine, mit den Schritten:

   a. Bereitstellen einer Waschmaschine (1), mit

   i. einem Waschmaschinen-Gehäuse (7) und einem Wasch-Aggregat (2),
   ii. mindestens einem Aufhängungs-Element (6) zum schwingungsfähigen Befestigen des Wasch-Aggregats (2) an dem Waschmaschinen-Gehäuse (7), und
   iii. mindestens einem Dämpfer (12) zum Dämpfen der Bewegung des Wasch-Aggregats (2), wobei der mindestens eine Dämpfer (12) ein Gehäuse (13), einen in dem Gehäuse (13) verschiebbaren Stößel (15) und einen relativ zu diesen verschiebbaren Kolben (33) aufweist,

   b. Bestimmen eines ersten Messwertes ($M_1$) im unbeladenen Zustand der Waschmaschine (1) durch Messen einer die Beladung (B) charakterisierenden Größe,
   c. Berechnen einer ersten Dämpfer-Kraft ($F_D (M_1)$) des mindestens einen Dämpfers (12) in Abhängigkeit des ersten Messwertes ($M_1$),
   d. Bestimmen eines zweiten Messwertes ($M_2$) im beladenen Zustand der Waschmaschine (1) durch Messen der die Beladung (B) charakterisierenden Größe,
   e. Berechnen einer zweiten Dämpfer-Kraft ($F_D (M_2)$) des mindestens einen Dämpfers (12) in Abhängigkeit des zweiten Messwertes ($M_2$), **gekennzeichnet durch** folgende Schritte:
   f. Berechnen einer ersten Aufhängungs-Kraft ($F_A (M_1)$) des mindestens einen Aufhängungs-Elements (6) in Abhängigkeit des ersten Messwertes ($M_1$),
   g. Berechnen einer zweiten Aufhängungs-Kraft ($F_A (M_2)$) des mindestens einen Aufhängungs-Elements (6) in Abhängigkeit des zweiten Messwertes ($M_2$),
   h. Berechnen der Beladung (B) der Waschmaschine (1) in Abhängigkeit der Aufhängungs-Kräfte ($F_A (M_1)$, $F_A (M_2)$) und der Dämpfer-Kräfte ($F_D (M_1)$, $F_D (M_2)$).

2. Verfahren nach Anspruch 1, **dadurch gekennzeichnet, dass** die die Beladung (B) charakterisierende Größe eine Dämpfer-Länge (L) des mindestens einen Dämpfers (12) ist.

3. Verfahren nach Anspruch 1 oder 2, **dadurch gekennzeichnet, dass** in Abhängigkeit der Messwerte ($M_1$, $M_2$) jeweils eine Wasch-Aggregat-Position ($x_A (M_1)$, $x_A (M_2)$) des Wasch-Aggregats (2) berechnet wird.

4. Verfahren nach Anspruch 1, **dadurch gekennzeichnet, dass** die die Beladung (B) charakterisierende Größe eine Wasch-Aggregat-Position ($x_A$) des Wasch-Aggregats (2) ist.

5. Verfahren nach Anspruch 1 oder 2, **dadurch gekennzeichnet, dass** in Abhängigkeit der Messwerte ($M_1$, $M_2$) jeweils eine Dämpfer-Länge ($L (M_1)$, $L (M_2)$) des mindestens einen Dämpfers (12) berechnet wird.

6. Verfahren nach einem der Ansprüche 1 bis 5, **dadurch gekennzeichnet, dass** das Berechnen der ersten Dämpfer-Kraft ($F_D (M_1)$) durch Gleichsetzen mit der negativen ersten Aufhängungs-Kraft ($F_A (M_1)$) erfolgt.

7. Verfahren nach einem der Ansprüche 1 bis 6, **dadurch gekennzeichnet, dass** in Abhängigkeit der ersten Aufhängungs-Kraft ($F_A (M_1)$) oder der ersten Dämpfer-Kraft ($F_D (M_1)$) eine erste Kolben-Position ($x_K (M_1)$) des Kolbens (33) berechnet wird.

8. Verfahren nach Anspruch 7, **dadurch gekennzeichnet, dass** das Berechnen der ersten Kolben-Position ($x_K (M_1)$) in Abhängigkeit einer Dämpfer-Kennlinie ($F_D (x_K)$) des mindestens einen Dämpfers (12) erfolgt.

9. Verfahren nach einem der Ansprüche 1 bis 8, **dadurch gekennzeichnet, dass** die zweite Dämpfer-Kraft ($F_D (M_2)$) in Abhängigkeit einer zweiten Kolben-Position ($x_K (M_2)$) des Kolbens (33) und einer Dämpfer-Kennlinie ($F_D (x_K)$) des mindestens einen Dämpfers (12) berechnet wird.

10. Verfahren nach einem der Ansprüche 1 bis 9, **dadurch gekennzeichnet, dass** zum Berechnen der Beladung (B) die Summe aus der Differenz der Aufhängungs-Kräfte ($\Delta F_A$) und der Differenz der Dämpfer-Kräfte ($\Delta F_D$) gebildet wird.

**Claims**

1. Method for determining the load in a washing machine, comprising the steps of:

   a. providing a washing machine (1), with

   i. a washing machine casing (7) and a washing unit (2),
   ii. at least one suspension element (6) for the oscillatory fastening of the washing unit (2) on the washing machine casing (7), and
   iii. at least one damper (12) for damping the movement of the washing unit (2), the at least one damper (12) comprising a casing (13), a ram (15) which is displaceable in the casing (13) and a piston (33) which is displaceable relative thereto,

   b. determining a first measured value ($M_1$) in the unloaded state of the washing machine (1) by measuring a variable which characterises the load (B),
   c. calculating a first damper force ($F_D$ ($M_1$)) of the at least one damper (12) as a function of the first measured value ($M_1$),
   d. determining a second measured value ($M_2$) in the loaded state of the washing machine (1) by measuring the variable which characterises the load (B),
   e. calculating a second damper force ($F_D$ ($M_2$)) of the at least one damper (12) as a function of the second measured value ($M_2$),
   **characterized by** the following steps:
   f. calculating a first suspension force ($F_A$ ($M_1$)) of the at least one suspension element (6) as a function of the first measured value ($M_1$),
   g. calculating a second suspension force ($F_A$ ($M_2$)) of the at least one suspension element (6) as a function of the second measured value ($M_2$),
   h. calculating the load (B) of the washing machine (1) as a function of the suspension forces ($F_A$ ($M_1$), $F_A$ ($M_2$)) and the damper forces ($F_D$ ($M_1$), $F_D$ ($M_2$)).

2. Method according to claim 1, **characterised in that** the variable which characterises the load (B) is a damper length (L) of the at least one damper (12).

3. Method according to claim 1 or 2, **characterised in that** a respective washing unit position ($x_A$ ($M_1$), $x_A$ ($M_2$)) of the washing unit (2) is calculated as a function of the measured values ($M_1$, $M_2$).

4. Method according to claim 1, **characterised in that** the variable which characterises the load (B) is a washing unit position ($x_A$) of the washing unit (2).

5. Method according to claim 1 or 2, **characterised in that** a respective damper length (L ($M_1$), L ($M_2$)) of the at least one damper (12) is calculated as a function of the measured values ($M_1$, $M_2$).

6. Method according to any one of claims 1 to 5, **characterised in that** the first damper force ($F_D$ ($M_1$)) is calculated by equating with the negative first suspension force ($F_A$ ($M_1$)).

7. Method according to any one of claims 1 to 6, **characterised in that** a first piston position ($x_K$ ($M_1$)) of the piston (33) is calculated as a function of the first suspension force ($F_A$ ($M_1$)) or the first damper force ($F_D$ ($M_1$)).

8. Method according to claim 7, **characterised in that** the first piston position ($x_K$ ($M_1$)) is calculated as a function of a damper characteristic ($F_D$ ($x_K$)) of the at least one damper (12).

9. Method according to any one of claims 1 to 8, **characterised in that** the second damper force ($F_D$ ($M_2$)) is calculated as a function of a second piston position ($x_K$ ($M_2$)) of the piston (33) and a damper characteristic ($F_D$ ($x_K$)) of the at least damper (12).

10. Method according to any one of claims 1 to 9, **characterised in that** the sum of the difference between the suspension forces ($\Delta F_A$) and the difference between the damper forces ($\Delta F_D$) is formed for calculating the load (B).

**EP 1 867 891 B1**

**Revendications**

1. Procédé de détermination de la charge d'une machine à laver, comportant les étapes :

   a. de préparation d'une machine à laver (1), avec

   i. un carter (7) de machine à laver et un groupe de lavage (2),
   ii. au moins un élément de suspension (6) pour fixer le groupe de lavage (2) sur le carter (7) de machine à laver, de manière à permettre son oscillation, et
   iii. au moins un amortisseur (12) pour amortir le mouvement du groupe de lavage (2), le ou les amortisseurs (12) comportant un carter (13), un poussoir (15) coulissant dans le carter (13) et un piston (33) déplaçable par rapport à celui-ci,

   b. de détermination d'une première valeur de mesure ($M_1$) en état non chargé de la machine à laver (1), par mesure d'une grandeur caractéristique pour la charge (B),
   c. de calcul d'une première force d'amortisseur ($F_D(M_1)$) du au moins un amortisseur (12) en fonction de la première valeur de mesure ($M_1$),
   d. de détermination d'une deuxième valeur de mesure ($M_2$) en état chargé de la machine à laver (1), par mesure de la grandeur caractéristique pour la charge (B),
   e. de calcul d'une deuxième force d'amortisseur ($F_D(M_2)$) du au moins un amortisseur (12) en fonction de la deuxième valeur de mesure ($M_2$),
   **caractérisé par** les étapes suivantes :
   f. calcul d'une première force de suspension ($F_A(M_1)$) du au moins un élément de suspension (6) en fonction de la première valeur de mesure ($M_1$),
   g. calcul d'une deuxième force de suspension ($F_A(M_2)$) du au moins un élément de suspension (6) en fonction de la deuxième valeur de mesure ($M_2$),
   h. calcul de la charge (B) de la machine à laver (1) en fonction des forces de suspension ($F_A(M_1)$, $F_A(M_2)$) et des forces d'amortisseur ($F_D(M_1)$, $F_D M_2$)).

2. Procédé selon la revendication 1, **caractérisé en ce que** la grandeur caractéristique pour la charge (B) est une longueur (L) du au moins un amortisseurs (12).

3. Procédé selon la revendication 1 ou la revendication 2, **caractérisé en ce qu'**une position de groupe de lavage ($x_A(M_1)$, $x_A(M_2)$) du groupe de lavage (2) est calculée en fonction de chaque valeur de mesure ($M_1$, $M_2$).

4. Procédé selon la revendication 1, **caractérisé en ce que** la grandeur caractéristique pour la charge (B) est une position de groupe de lavage ($x_A$) du groupe de lavage (2).

5. Procédé selon la revendication 1 ou la revendication 2, **caractérisé en ce qu'**une longueur ($L(M_1)$, $L(M_2)$) du au moins un amortisseur (12) est calculée en fonction de chaque valeur de mesure ($M_1$, $M_2$).

6. Procédé selon l'une des revendications 1 à 5, **caractérisé en ce que** le calcul de la première force d'amortisseur ($F_D(M_1)$) est exécuté par égalisation avec la première force de suspension négative ($F_A(M_1)$).

7. Procédé selon l'une des revendications 1 à 6, **caractérisé en ce qu'**une première position de piston ($x_K(M_1)$) du piston (33) est calculée en fonction de la première force de suspension ($F_A(M_1)$) ou de la première force d'amortisseur ($F_D(M_1)$).

8. Procédé selon la revendication 7, **caractérisé en ce que** le calcul de la première position de piston ($x_K(M_1)$) est exécuté en fonction d'une courbe caractéristique ($F_D(x_K)$) du au moins un amortisseur (12).

9. Procédé selon l'une des revendications 1 à 8, **caractérisé en ce que** la deuxième force d'amortisseur ($F_D(M_2)$) est calculée en fonction d'une deuxième position depiston ($x_K(M_2)$) du piston (33) et d'une courbe caractéristique ($F_D(x_K)$) du au moins un amortisseur (12).

10. Procédé selon l'une des revendications 1 à 9, **caractérisé en ce que,** pour le calcul de la charge (B), il est formé le total de la différence des forces de suspension ($\Delta F_A$) avec la différence des forces d'amortisseur ($\Delta F_D$).

Fig. 1

Fig. 2

Fig. 3

EP 1 867 891 B1

Fig. 4

Fig. 5

Fig. 6

48a

49a

50a

51

52

54    55    53    56

57

58a

59a

60

61

62

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10334572 B
- DE 102005038950

- DE 102005038953